# EUROPÄISCHE PATENTSCHRIFT

(11) **EP 1 589 265 B1**
(45) Veröffentlichungstag und Bekanntmachung des Hinweises auf die Patenterteilung: **04.10.2006**
(21) Anmeldenummer: 04009238.9
(22) Anmeldetag: 19.04.2004
(51) Int. Cl.: F16H 63/42, B60Q 3/04

(54) **Beleuchtungseinrichtung**
Lighting device
Dispositif d'éclairage

(43) Veröffentlichungstag der Anmeldung: 26.10.2005
(73) Patentinhaber: Delphi Technologies, Inc., Troy, MI 48007 (US)
(72) Erfinder: Bruchhage, Walter F., 51789 Lindlar (DE); Luft, Thomas, 51709 Marienheide (DE)
(74) Vertreter: Manitz, Finsterwald & Partner GbR

(56) Entgegenhaltungen:
- EP-A- 0 777 108
- EP-A- 1 179 448
- WO-A-99/02897
- DE-U- 29 606 501
- US-A- 5 696 483

## Beschreibung

Die Erfindung betrifft eine Einrichtung zur Beleuchtung einer Anzeige, insbesondere einer Ganganzeige eines Kraftfahrzeuges. Eine solche Beleuchtungseinrichtung kann beispielsweise ein kapazitives oder interaktives Panel oder Anzeigenfeld umfassen.

Ein Problem solcher Beleuchtungseinrichtungen besteht darin, eine gleichmäßige Ausleuchtung der Gesamtanzeige bei gleichzeitig abgesetzter, insbesondere erhellter Beleuchtung einer jeweiligen Anzeigenposition bzw. Einzelanzeige, wie insbesondere Gangstellungsanzeige.

In der EP-A-0 777 108 ist bereits eine Einrichtung zur Beleuchtung einer Anzeige, insbesondere einer Ganganzeige eines Kraftfahrzeugs, beschrieben. Diese Einrichtung umfasst ein flächiges Leuchtmittel für eine zumindest im Wesentlichen gleichmäßige Beleuchtung der Gesamtanzeige in Kombination mit wenigstens einer Glühlampe für eine im Vergleich zur gleichmäßigen Beleuchtung der Gesamtanzeige abgesetzte, intensivere Beleuchtung einer jeweiligen Einzelanzeige, bei der es sich beispielsweise um eine Gangstellungsanzeige handeln kann. Die verschiedenen elektrischen Elemente sind hier auf einer Leiterplatte montiert.

Der Erfindung liegt die Aufgabe zugrunde, eine verbesserte Beleuchtungseinrichtung der eingangs genannten Art zu schaffen, bei der das zuvor genannte Problem beseitigt ist. Dabei soll auf wirtschaftliche und zuverlässige Art und Weise gleichzeitig insbesondere eine gleichmäßige Ausleuchtung der Gesamtanzeige sowie eine abgesetzte, insbesondere hellere Beleuchtung einer jeweiligen Einzelposition oder -anzeige, insbesondere Gangstellungsanzeige, gewährleistet sein.

Diese Aufgabe wird erfindungsgemäß gelöst durch eine Einrichtung zur Beleuchtung einer Anzeige, insbesondere einer Ganganzeige eines Kraftfahrzeuges, mit einem flächigen Leuchtmittel für eine zumindest im Wesentlichen gleichmäßige Beleuchtung der Gesamtanzeige in Kombination mit wenigstens einer Leuchtdiode für eine im Vergleich zur gleichmäßigen Beleuchtung der Gesamtanzeige abgesetzte, insbesondere intensivere Beleuchtung einer jeweiligen Einzelanzeige, insbesondere Gangstellungsanzeige, wobei das flächige Leuchtmittel gleichzeitig als Träger wenigstens eines elektronischen Bauelements wie insbesondere wenigstens einer Leuchtdiode, wenigstens eines der Ansteuerung der Leuchtdiode dienenden elektronischen Bauelements, wenigstens eines der Ansteuerung der flächigen Leuchtmittel dienenden elektronischen Bauelements und/ oder wenigstens einer insbesondere flexiblen Leiterbahn vorgesehen ist.

Die gleichmäßige Beleuchtung der Gesamtanzeige wird also durch ein flächiges Leuchtmittel sichergestellt, während eine im Vergleich zu dieser gleichmäßigen Beleuchtung der Gesamtanzeige abgesetzte, insbesondere intensivere Beleuchtung einer jeweiligen Einzelposition oder -anzeige, insbesondere Gangstellungsanzeige, mittels wenigstens einer Leuchtdiode gewährleistet wird. Das flächige Leuchtmittel in Form einer elektrolumineszierenden Folie, einer organischen Leuchtdiode oder eines Flachlichtleiters ist ohne weiteres in der Lage, die für die gleichmäßige Beleuchtung der Gesamtanzeige erforderliche Lichtstärke bei hinreichender Lebensdauer zu liefern. Anders als bei einer elektrolumineszierenden Folie oder einer organischen Leuchtdiode kann bei einer Leuchtdiode (LED) die zur intensiveren Beleuchtung einer jeweiligen Einzelposition bzw. -anzeige erforderliche erhöhte Lichtstärke problemlos ohne Einschränkung der Lebensdauer dieses elektronischen Bauteils bereitgestellt werden.

Die erhellt leuchtende Einzelanzeige bzw. Gangstellung könnte grundsätzlich also ebenfalls durch eine elektrolumineszierende Folie oder eine organische Leuchtdiode erreicht werden. Hier wäre jedoch durch die erforderliche erhöhte Lichtstärke die Lebensdauer einer solchen elektrolumineszierenden Folie oder organischen Leuchtdiode stark reduziert. Eine gleichmäßige Hintergrundbeleuchtung durch eine Lichtfarbe in Kombination mit einer andersfarbigen Funktionsbeleuchtung wäre hier nur begrenzt möglich.

Was die einzelnen Anzeigepositionen bzw. Einzelanzeigen betrifft, so kann es sich dabei beispielsweise um die Positionen "P-R-N-D" der Gangstellung eines Kraftfahrzeuges handeln.

Bevorzugt umfasst die Beleuchtungseinrichtung eine zumindest teilweise lichtdurchlässige Frontblende. Die jeweiligen Einzelanzeigen bzw. einzelnen Positionen der Gangstellung können also über eine solche zumindest teilweise lichtdurchlässige Frontblende angezeigt werden.

Es sind unterschiedliche Arten der Schichtung der verschiedenen Lichtbaugruppen oder elektronischen Bauelemente in ihrer Anordnung relativ zueinander denkbar.

Vorteilhafterweise ist das elektronische Bauelement bzw. die Leiterbahn auf der der zumindest teilweise lichtdurchlässigen Frontblende zugewandten lichtemittierenden Seite des flächigen Leuchtmittels angeordnet.

Es kann eine Schutzfolie oder Schutzlack für die wenigstens eine Leiterbahn vorgesehen sein.

Optional kann die Beleuchtungseinrichtung beispielsweise auch wenigstens einen Treiber (Lampdriver) zur Ansteuerung der elektrolumineszierenden Folie und optional Widerstände zur Ansteuerung der Leuchtdiode umfassen.

Es ist beispielsweise eine Ausführungsform der Beleuchtungseinrichtung mit einer solchen Schichtung der Lichtbaugruppen bzw. elektronischen Bauelemente denkbar, bei der diese wie folgt relativ zueinander und aufeinander folgend angeordnet sind:
Frontblende, Schutzfolie oder Schutzlack, wenigstens eine Leuchtdiode, optional mit elektronischen Bauelementen und Leiterbahnen, flächiges Leuchtmittel, das auf der lichtemittierenden Seite mit den Leiterbahnen beklebt, bedruckt oder nach Art einer FPC-Herstellung geätzt ist (FPC = flexible printed circuit, flexible gedruckte Schaltung).

Auf der der zumindest teilweise lichtdurchlässigen Frontblende zugewandten lichtemittierenden Seite des flächigen Leuchtmittels kann zweckmäßigerweise auch eine mit wenigstens einer Leuchtdiode bestückte flexible gedruckte Schaltung (FPC) angeordnet sein. In diesem Fall dient die flexible gedruckte Schaltung (FPC) als Träger des wenigstens einen, beispielsweise durch eine Leuchtdiode gebildeten elektronischen Bauelements. Bevorzugt ist die FPC teilweise durchscheinend und/oder ausgeschnitten.

Bevorzugt dient die flexible gedruckte Schaltung (FPC) gleichzeitig als Träger wenigstens eines weiteren elektronischen Bauelements wie insbesondere wenigstens eines der Ansteuerung der Leuchtdiode dienenden elektronischen Bauelements und/oder wenigstens eines der Ansteuerung des flächigen Leuchtmittels bzw. der flexiblen gedruckten Schaltung dienenden elektronischen Bauelements.

Es ist beispielsweise also auch eine solche Schichtung der Lichtbaugruppe bzw. elektronischen Bauelemente möglich, bei der diese Lichtbaugruppen bzw. elektronischen Bauelemente wie folgt relativ zueinander und aufeinander folgend angeordnet sind:
Zumindest teilweise durchsichtige bzw. transluzente Frontblende, mit zumindest einer Leuchtdiode bestückte flexible gedruckte Schaltung (FPC), flächiges Leuchtmittel.

Ein jeweiliges elektronisches Bauelement kann jeweils beispielsweise mittels eines Leitklebers oder Lots auf dem flächigen Leuchtmittel bzw. der insbesondere flexiblen Leiterbahn oder flexiblen gedruckten Schaltung (FPC) kontaktiert und befestigt sein.

Bei den beiden zuvor erwähnten beispielhaften Schichtungen sind die Leuchtdioden bzw. weiteren elektronischen Bauelemente jeweils zwischen einerseits dem flächigen Leuchtmittel bzw. der insbesondere flexiblen Leiterbahn oder flexiblen gedruckten Schaltung (FPC) und andererseits der zumindest teilweise lichtdurchlässigen Frontblende angeordnet.

Bei einer weiteren zweckmäßigen praktischen Ausführungsform der erfindungsgemäßen Beleuchtungseinrichtung ist das flächige Leuchtmittel mit wenigstens einem isolierten Ausschnitt für eine zumindest teilweise Aufnahme einer jeweiligen Leuchtdiode versehen.

Grundsätzlich kann das flächigen Leuchtmittel auch mit wenigstens einem isolierten Ausschnitt für eine zumindest teilweise Aufnahme eines jeweiligen weiteren elektronischen Bauelements wie insbesondere eines jeweiligen der Ansteuerung der Leuchtdiode dienenden elektronischen Bauelements und/oder wenigstens eines jeweiligen der Ansteuerung des flächigen Leuchtmittels dienenden elektronischen Bauelements versehen sein.

Auf der von der zumindest teilweise lichtdurchlässigen Frontblende abgewandten Seite des flächigen Leuchtmittels ist bevorzugt eine mit wenigstens einer Leuchtdiode und/oder wenigstens einem weiteren elektronischen Bauelement bestückte flexible gedruckte Schaltung (FPC) angeordnet.

Es ist also beispielsweise auch eine solche Schichtung der verschiedenen Lichtbaugruppen bzw. elektronischen Bauelemente möglich, bei der diese Lichtbaugruppen bzw. elektronischen Bauelemente wie folgt relativ zueinander und aufeinander folgend angeordnet sind:
Zumindest teilweise lichtdurchlässige bzw. transluzente Frontlinsen, flächiges Leuchtmittel mit wenigstens einem isolierten Ausschnitt im Bereich wenigstens einer Leuchtdiode und/oder im Bereich wenigstens eines weiteren elektronischen Bauelements, mit wenigstens einer Leuchtdiode und/oder wenigstens einem weiteren elektronischen Bauelement bestückte flexible gedruckte Schaltung (FPC).

Die Erfindung wird im Folgenden anhand von Ausführungsbeispielen unter Bezugnahme auf die Zeichnung näher erläutert; in dieser zeigen:

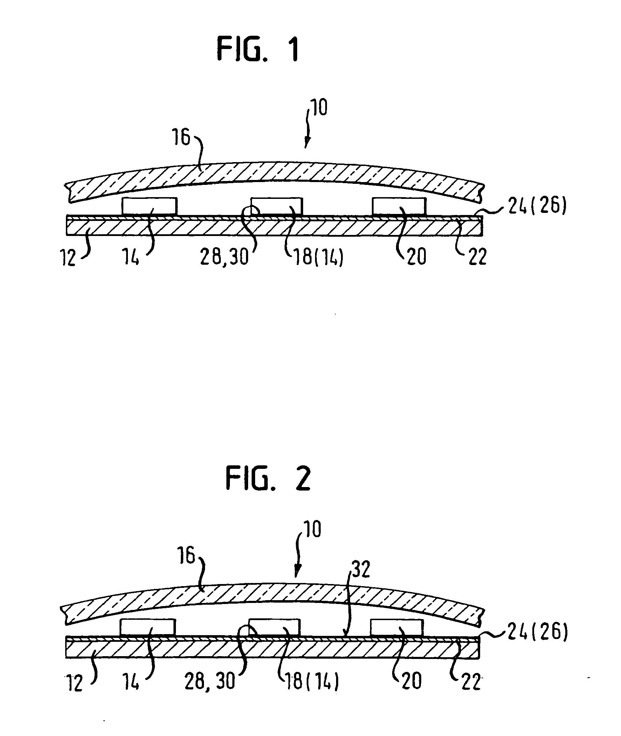

- Fig. 1: eine vereinfachte schematische Darstellung einer Einrichtung zur Beleuchtung einer Anzeige mit einer zumindest teilweise lichtdurchlässigen Frontblende, wenigstens einer Leuchtdiode, und einem flächigen Leuchtmittel, wobei das flächige Leuchtmittel gleichzeitig als Träger für die Leuchtdiode und optional für wenigstens ein weiteres elektronisches Bauelement dient und eine Schutzfolie oder Schutzlack für die Leiterbahnen vorgesehen ist,
- Fig. 2: eine vereinfachte schematische Darstellung einer weiteren Ausführungsform der Beleuchtungseinrichtung, wobei im vorliegenden Fall auf der der Frontblende zugewandten lichtemittierenden Seite des flächigen Leuchtmittels eine mit wenigstens einer Leuchtdiode bestückte flexible gedruckte Schaltung angeordnet ist, und

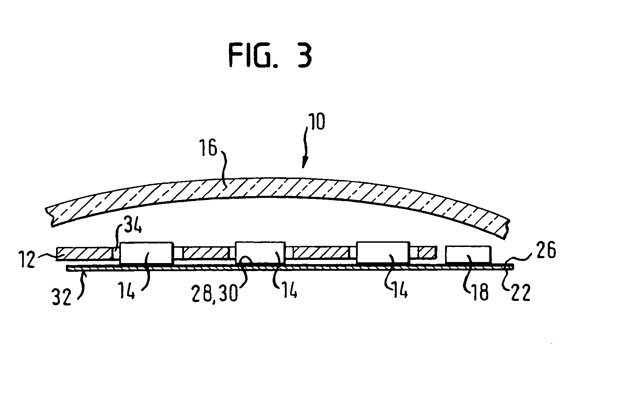

- Fig. 3: eine vereinfachte schematische Darstellung einer weiteren Ausführungsform der Beleuchtungseinrichtung, wobei im vorliegenden Fall das flächige Leuchtmittel mit wenigstens einem isolierten Ausschnitt für eine zumindest teilweise Aufnahme einer jeweiligen Leuchtdiode versehen und auf der von der Frontblende abgewandten Seite des flächigen Leuchtmittels eine mit wenigstens einer solchen Leuchtdiode bestückte flexible gedruckte Schaltung angeordnet ist.

Fig. 1 zeigt in schematischer vereinfachter Darstellung eine erste beispielhafte Ausführungsform einer Einrichtung 10 zur Beleuchtung einer Anzeige, bei der es sich beispielsweise um eine Ganganzeige eines Kraftfahrzeuges handeln kann.

Die Beleuchtungseinrichtung 10 umfasst ein flächiges Leuchtmittel, das bei den dargestellten Ausführungsbeispielen eine elektrolumineszierende Folie 12 für eine zumindest im Wesentlichen gleichmäßige Beleuchtung der Gesamtanzeige in Kombination mit wenigstens einer Leuchtdiode 14 für eine im Vergleich zur gleichmäßigen Beleuchtung der Gesamtanzeige abgesetzte, insbesondere intensivere Beleuchtung einer jeweiligen einzelnen Position der Anzeige bzw. Einzelanzeige, insbesondere Gangstellungsanzeige ist. Bei den einzelnen Positionen bzw. Einzelanzeigen kann es sich also insbesondere um die Positionen "P-R-N-D" einer Gangstellungsanzeige eines Kraftfahrzeuges handeln.

Die Beleuchtungseinrichtung 10 umfasst überdies eine zumindest teilweise lichtdurchlässige oder transluszente Frontblende 16. Die einzelnen Positionen bzw. Einzelanzeigen können dann über die Leuchtdioden 14 in der Frontblende 16 angezeigt werden.

Die elektrolumineszierende Folie 12 dient im vorliegenden Fall nicht nur als Träger wenigstens einer Leuchtdiode 14, sondern gleichzeitig auch als Träger wenigstens eines weiteren elektronischen Bauelements wie insbesondere wenigstens eines der Ansteuerung der Leuchtdiode 14 dienenden elektronischen Bauelements 18 wie beispielsweise eines Widerstandes, wenigstens eines der Ansteuerung der elektrolumineszierenden Folie 12 dienenden elektronischen Bauelements 20 wie beispielsweise eines Lampdrivers und/oder wenigstens einer Leiterbahn 22, von der in der Regel mehrere vorgesehen sind und bei denen es sich beispielsweise auch um flexible Leiterbahnen handeln kann.

Zweckmäßigerweise ist eine lichtdurchlässige Schutzfolie 24 oder ein lichtdurchlässiger Schutzlack 26 für die wenigstens eine Leiterbahn 22 vorgesehen.

Wie anhand der Fig. 1 zu erkennen ist, sind die elektronischen Bauelemente 14, 18 bis 26 bzw. die Leiterbahnen 22 auf der der zumindest teilweise lichtdurchlässigen Frontblende 16 zugewandten lichtemittierenden Seite der elektrolumineszierenden Folie 12 angeordnet.

Die elektrolumineszierende Folie 12 kann aus ihrer der zumindest teilweise lichtdurchlässigen Frontblende 16 zugewandten lichtemittierenden Seite mit der wenigstens einen Leiterbahn 22 beklebt, bedruckt oder nach Art einer FPC-Herstellung geätzt sein.

Die elektronischen Bauelemente 14, 18 bis 22 können mittels eines Leitklebers 28 oder Lots 30 auf der elektrolumineszierenden Folie 12 bzw. der Leiterbahn 22, bei der es sich wie bereits erwähnt auch beispielsweise um eine flexible Leiterbahn handeln kann, kontaktiert und befestigt sein.

Fig. 1 zeigt also eine Ausführungsform der Beleuchtungseinrichtung 10 mit einer solchen Schichtung von Leuchtbaugruppen bzw. elektronischen Bauelementen, bei der diese wie folgt relativ zueinander angeordnet sind:
Frontblende 16, Schutzfolie 24 oder Schutzlack 26, wenigstens eine Leuchtdiode 14, optional wenigstens ein weiteres elektronisches Bauelement 18 bis 26 wie insbesondere wenigstens ein der Ansteuerung der Leuchtdiode 14 dienendes elektronisches Bauelement 18, z.B. ein oder mehrere Widerstände, wenigstens ein der Ansteuerung der elektrolumineszierenden Folie 12 dienendes elektronisches Bauelement 20 wie zum Beispiel ein Lampdriver und/oder wenigstens eine Leiterbahn 22, bei der es sich wie bereits erwähnt beispielsweise auch um eine flexible Leiterbahn handeln kann, eine elektrolumineszierende Folie 12, die auf der der Frontblende 16 zugewandten lichtemittierenden Seite mit den Leiterbahnen 22 beklebt, bedruckt oder nach Art einer FPC-Herstellung geätzt ist.

Fig. 2 zeigt in vereinfachter schematischer Darstellung eine weitere Ausführungsform der Beleuchtungseinrichtung 10. Im vorliegenden Fall ist auf der der zumindest teilweise lichtdurchlässigen Frontblende 16 zugewandten lichtemittierenden Seite der elektrolumineszierenden Folie 12 eine mit wenigstens einer Leuchtdiode 14 bestückte flexible gedruckte Schaltung 32, FPC, angeordnet. In diesem Fall dient also die flexible gedruckte Schaltung 32, FPC als Träger des durch die Leuchtdiode 14 gebildeten elektronischen Bauelements.

Dabei kann die flexible gedruckte Schaltung 32, FPC gleichzeitig auch als Träger wenigstens eines weiteren elektronischen Bauelements wie insbesondere wenigstens eines der Ansteuerung der Leuchtdiode 14 dienenden elektronischen Bauelements 18, beispielsweise ein oder mehrerer Widerstände, und/oder wenigstens eines der Ansteuerung der elektrolumineszierenden Folie 12 bzw. flexiblen gedruckten Schaltung 32, FPC dienenden elektronischen Bauelements 20 zum Beispiel Lampdrivers, dienen.

Für die Leiterbahn bzw. Leiterbahnen 22 kann wieder eine Schutzfolie 24 oder Schutzlack 26 vorgesehen sein.

Die elektronischen Bauelemente 14, 18 bis 22 können wieder mittels eines Leitklebers 28 oder Lots 30 auf der flexiblen gedruckten Schaltung 32, FPC kontaktiert und befestigt sein.

Fig. 2 zeigt also eine Ausführungsform der Beleuchtungseinrichtung 10 mit einer solchen Schichtung der Lichtbaugruppen oder elektronischen Bauelemente, bei der diese wie folgt relativ zueinander angeordnet sind:
Frontblende 16, zumindest teilweise lichtdurchlässige bzw. transluszente, mit zumindest einer Leuchtdiode 14 bestückte flexible gedruckte Schaltung 32, FPC, elektrolumineszierende Folie 12.

Bei den beiden zuvor beschriebenen Ausführungsformen gemäß den Fig. 1 und 2 sind das wenigstens eine durch eine Leuchtdiode 14 gebildete elektronische Bauelement bzw. das wenigstens eine weitere elektronische Bauelement 14, 18 bis 26 zwischen einerseits der elektrolumineszierenden Folie 12 bzw. der Leiterbahn 22 oder flexiblen gedruckten Schaltung 32, FPC und andererseits der zumindest teilweise lichtdurchlässigen Frontblende 16 angeordnet.

Bei der Ausführungsform gemäß Fig. 3 ist die elektrolumineszierende Folie 12 mit wenigstens einem isolierten Ausschnitt 34 für eine zumindest teilweise Aufnahme einer jeweiligen Leuchtdiode 14 versehen. Im vorliegenden Fall sind mehrere solche Leuchtdioden 14 in einem jeweiligen isolierten Ausschnitt 34 der elektrolumineszierenden Folie 12 aufgenommen. Darüber hinaus kann die elektrolumineszierende Folie 12 mit wenigstens einem isolierten Ausschnitt 34 für eine zumindest teilweise Aufnahme eines jeweiligen weiteren elektronischen Bauelements wie insbesondere eines jeweiligen der Ansteuerung der Leuchtdioden 14 dienenden elektronischen Bauelements 18, beispielsweise wenigstens eines Widerstandes, und/oder wenigstens eines jeweiligen der Ansteuerung der elektrolumineszierenden Folie 12 dienenden elektronischen Bauelements 20, zum Beispiel Lampdrivers, versehen sein.

Zudem ist auf der von der zumindest teilweise lichtdurchlässigen Frontblende 16 abgewandten Seite der elektrolumineszierenden Folie 12 eine mit wenigstens einer Leuchtdiode 14 und/oder wenigstens einem weiteren elektronischen Bauelement 14, 18, 22, 26 bestückte flexible gedruckte Schaltung 32, FPC angeordnet.

Für die im Bereich der flexiblen gedruckten Schaltung 32, FPC vorgesehene Leiterbahn oder Leiterbahnen 22 kann insbesondere wieder eine Schutzfolie 24 oder ein Schutzlack 26 vorgesehen sein.

Die elektronischen Bauelemente 14, 18, 22 können beispielsweise mittels eines Leitklebers 28 oder Lots 30 auf der flexiblen gedruckten Schaltung 32, FPC kontaktiert und befestigt sein.

Fig. 3 zeigt also eine Ausführungsform der Beleuchtungseinrichtung 10 mit einer solchen Schichtung der Lichtbaugruppen bzw. elektronischen Bauelemente, bei der diese wie folgt relativ zueinander angeordnet sind:
Frontblende 16, elektrolumineszierende Folie 12 mit isolierten Ausschnitten 34 im Bereich der Leuchtdioden 14, mit wenigstens einer Leuchtdiode 14 bestückte flexible gedruckte Schaltung 32, FPC, die optional zusätzlich mit weiteren elektronischen Bauelementen bestückt sein kann.

### Bezugszeichenliste

- 10: Beleuchtungseinrichtung
- 12: flächiges Leuchtmittel
- 14: Leuchtdiode, elektronisches Bauelement
- 16: Frontblende
- 18: elektronisches Bauelement zur Ansteuerung einer Leuchtdiode, Widerstand
- 20: elektronisches Bauelement zur Ansteuerung der elektrolumineszierenden Folie, Lampdriver
- 22: Leiterbahn
- 24: Schutzfolie
- 26: Schutzlack
- 28: Leitkleber
- 30: Lot
- 32: zumindest teilweise lichtdurchlässige flexible gedruckte Schaltung (FPC)
- 34: isolierter Ausschnitt

## Patentansprüche

1. Einrichtung (10) zur Beleuchtung einer Anzeige, insbesondere einer Ganganzeige eines Kraftfahrzeuges, mit einem flächigen Leuchtmittel (12) für eine zumindest im Wesentlichen gleichmäßige Beleuchtung der Gesamtanzeige in Kombination mit wenigstens einer Leuchtdiode (14) für eine im Vergleich zur gleichmäßigen Beleuchtung der Gesamtanzeige abgesetzte, insbesondere intensivere Beleuchtung einer jeweiligen Einzelanzeige, insbesondere Gangstellungsanzeige, wobei das flächige Leuchtmittel (12) gleichzeitig als Träger wenigstens eines elektronischen Bauelements (14, 18 bis 26) wie insbesondere wenigstens einer Leuchtdiode (14), wenigstens eines der Ansteuerung der Leuchtdiode (14) dienenden elektronischen Bauelements (18), wenigstens eines der Ansteuerung der flächigen Leuchtmittel (12) dienenden elektronischen Bauelements (20) und/ oder wenigstens einer insbesondere flexiblen Leiterbahn (22) vorgesehen ist.

2. Beleuchtungseinrichtung nach Anspruch 1,
**dadurch gekennzeichnet,**
**dass** sie eine zumindest teilweise lichtdurchlässige Frontblende (16) umfasst.

3. Beleuchtungseinrichtung nach Anspruch 1 oder 2,
**dadurch gekennzeichnet,**
**dass** das elektronische Bauelement (14, 18 bis 26) bzw. die Leiterbahn (22) auf der der zumindest teilweise lichtdurchlässigen Frontblende (16) zugewandten lichtemittierenden Seite des flächigen Leuchtmittels (12) angeordnet ist.

4. Beleuchtungseinrichtung nach einem der vorhergehenden Ansprüche,
**dadurch gekennzeichnet,**
**dass** eine Schutzfolie (24) oder Schutzlack (26) für die wenigstens eine Leiterbahn (22) vorgesehen ist.

5. Beleuchtungseinrichtung nach einem der vorhergehenden Ansprüche,
**dadurch gekennzeichnet,**
**dass** das flächige Leuchtmittel (12) auf seiner der zumindest teilweise lichtdurchlässigen Frontblende (16) zugewandten lichtemittierenden Seite mit der Leiterbahn (22) beklebt, bedruckt oder nach Art einer FPC-Herstellung geätzt ist.

6. Beleuchtungseinrichtung nach Anspruch 2,
**dadurch gekennzeichnet,**
**dass** auf der der zumindest teilweise lichtdurchlässigen Frontblende (16) zugewandten lichtemittierenden Seite des flächigen Leuchtmittels (12) eine mit wenigstens einer Leuchtdiode (14) bestückte flexible gedruckte Schaltung (32, FPC) angeordnet ist und somit diese flexible gedruckte Schaltung (32, FPC) als Träger des durch die Leuchtdiode (14) gebildeten elektronischen Bauelements dient.

7. Beleuchtungseinrichtung nach Anspruch 6,
**dadurch gekennzeichnet,**
**dass** die flexible gedruckte Schaltung (32, FPC) gleichzeitig als Träger wenigstens eines weiteren elektronischen Bauelements wie insbesondere wenigstens eines der Ansteuerung der Leuchtdiode (14) dienenden elektronischen Bauelements (18) und/oder wenigstens eines der Ansteuerung des flächigen Leuchtmittels (12) bzw. flexiblen gedruckten Schaltung (32, FPC) dienenden elektronischen Bauelements (20) dient.

8. Beleuchtungseinrichtung nach einem der vorhergehenden Ansprüche,
**dadurch gekennzeichnet,**
**dass** das elektronische Bauelement (14, 18 bis 22) mittels eines Leitklebers (28) oder Lots (30) auf dem flächigen Leuchtmittel (12) bzw. der insbesondere flexiblen Leiterbahn (22) oder flexiblen gedruckten Schaltung (32FPC) kontaktiert und befestigt ist.

9. Beleuchtungseinrichtung nach einem der vorhergehenden Ansprüche,
**dadurch gekennzeichnet,**
**dass** das durch die Leuchtdiode (14) gebildete elektronische Bauelement bzw. das weitere elektronische Bauelement (14, 18 bis 26) zwischen einerseits dem flächigen Leuchtmittel (12) bzw. der insbesondere flexiblen Leiterbahn (22) oder flexiblen gedruckten Schaltung (32, FPC) und andererseits der zumindest teilweise lichtdurchlässigen Frontblende (16) angeordnet ist.

10. Beleuchtungseinrichtung nach Anspruch 1 oder 2,
**dadurch gekennzeichnet,**
**dass** das flächige Leuchtmittel (12) mit wenigstens einem isolierten Ausschnitt (34) für eine zumindest teilweise Aufnahme einer jeweiligen Leuchtdiode (14) versehen ist.

11. Beleuchtungseinrichtung nach Anspruch 10,
**dadurch gekennzeichnet,**
**dass** das flächige Leuchtmittel (12) mit wenigstens einem isolierten Ausschnitt (34) für eine zumindest teilweise Aufnahme eines jeweiligen weiteren elektronischen Bauelements wie insbesondere eines jeweiligen der Ansteuerung der Leuchtdiode (14) dienenden elektronischen Bauelements (18) und/oder wenigstens eines jeweiligen der Ansteuerung der flächigen Leuchtmittel (12) dienenden elektronischen Bauelements (20) versehen ist.

12. Beleuchtungseinrichtung nach Anspruch 10 oder 11,
**dadurch gekennzeichnet,**
**dass** auf der von der zumindest teilweise lichtdurchlässigen Frontblende (16) abgewandten Seite des flächigen Leuchtmittels (12) eine mit wenigstens einer Leuchtdiode (14) und/oder wenigstens einem weiteren elektronischen Bauelement (14, 18, 22, 26) bestückte flexible gedruckte Schaltung (32, FPC) angeordnet ist.

13. Beleuchtungseinrichtung nach einem der vorhergehenden Ansprüche,
**dadurch gekennzeichnet,**
**dass** das flächige Leuchtmittel (12) eine elektrolumineszierende Folie, eine organische Leuchtdiode oder ein Flachlichtleiter ist.

## Claims

1. A device (10) for the illumination of a display, in particular of a gear selection display of a motor vehicle comprising an areal lighting means (12) for an at least substantially uniform illumination of the total display in combination with at least one light emitting diode (14) for an illumination of a respective individual display, in particular of a selected gear display, differentiated in comparison with the uniform illumination of the total display, and in particular being a more intense illumination, wherein the areal lighting means (12) is simultaneously provided as a support for at least one electronic component (14, 18 to 26), such as in particular at least one light emitting diode (14), for at least one electronic component (18) serving for the control of the light emitting diode (14), for at least one electronic component (20) serving for the control of the areal lighting means (12) and/or for at least one conductor track (22), in particular a flexible conductor track

2. An illumination device in accordance with claim 1, **characterized in that** it comprises an at least partly transparent front face (16).

3. An illumination device in accordance with claim 1 or claim 2, **characterized in that** the electronic component (14, 18 to 26) and/or the conductor track (22) is/are arranged on the light emitting side of the areal lighting means (12) facing the at least partly transparent front face (16).

4. An illumination device in accordance with any one of the preceding claims, **characterized in that** a protective foil (24) or a protective lacquer (26) is provided for the at least one conductor track (22).

5. An illumination device in accordance with any one of the preceding claims, **characterized in that** the areal lighting means (12) is bonded, printed or etched in the manner of FPC production to the conductor track (22) on its light emitting side facing the at least partly transparent front face (16).

6. An illumination device in accordance with claim 2, **characterized in that** a flexible printed circuit (32, FPC) fitted with at least one light emitting diode (14) is arranged on the light emitting side of the areal lighting means (12) facing the at least partly transparent front face (16) and this flexible printed circuit (32, FPC) thus serves as a carrier of the electronic component formed by the light emitting diode (14).

7. An illumination device in accordance with claim 6, **characterized in that** the flexible printed circuit (32, FPC) simultaneously serves as a carrier for at least one further electronic component such as in particular at least one electronic component (18) serving for the control of the light emitting diode (14) and/or at least one electronic component (20) serving for the control of the areal lighting means (12) or of the flexible printed circuit (32, FPC).

8. An illumination device in accordance with any one of the preceding claims, **characterized in that** the electronic component (14, 18 to 22) is contacted and secured to the areal lighting means (12) or to the in particular flexible conductor track (22) or to the flexible printed circuit (32, FPC) by means of a conductive adhesive (28) or solder (30).

9. An illumination device in accordance with any one of the preceding claims, **characterized in that** the electronic component formed by the light emitting diode (14) or the further electronic component (14, 18 to 26) is arranged, on the one hand, between the areal lighting means (12) or the in particular flexible conductor track (22) or flexible printed circuit (32, FPC) and, on the other hand, the at least partly transparent front face (16).

10. An illumination device in accordance with claim 1 or claim 2, **characterized in that** the areal lighting means (12) is provided with at least one insulated cut-out (34) for an at least partial reception of a respective light emitting diode (14).

11. An illumination device in accordance with claim 10, **characterized in that** the areal lighting means (12) is provided with at least one insulated cut-out (34) for an at least partial reception of a respective further electronic component, such as in particular of a respective electronic component (18) serving for the control of the light emitting diode (14) and/or of at least one respective electronic component (20) serving for the control of the areal lighting means (12).

12. An illumination device in accordance with claim 10 or claim 12, **characterized in that** a flexible printed circuit (32, FPC) fitted with at least one light emitting diode (14) and/or at least one further electronic component (14, 18, 22, 26) is arranged on the side of the areal lighting means (12) remote from the at least partly transparent front face (16).

13. An illumination device in accordance with any one of the preceding claims, **characterized in that** the areal lighting means (12) is an electroluminescent foil, an organic light emitting diode or a flat light guide.

## Revendications

1. Dispositif (10) d'éclairage d'un affichage, en particulier d'un affichage des rapports de transmission d'un véhicule automobile, comportant un moyen luminescent plan (12) pour un éclairage au moins sensiblement uniforme de l'ensemble d'affichage, combiné à au moins une diode luminescente (14) pour un éclairage d'un affichage individuel donné, et en particulier l'affichage du rapport sélectionné, différentié en particulier plus intense par rapport à l'éclairage uniforme de l'ensemble d'affichage, , dans lequel le moyen luminescent plan (12) est prévu en même temps comme support d'au moins un composant électronique (14, 18 à 26), tel qu'en particulier au moins une diode luminescente (14), d'au moins un composant électronique (18) servant à l'activation de la diode luminescente (14), d'au moins un composant électronique (20) servant à l'activation du moyen luminescent plan (12) et/ou d' en particulier au moins une piste conductrice flexible (22).

2. Dispositif d'éclairage selon la revendication 1, **caractérisé en ce qu'**il comprend un diaphragme frontal au moins partiellement transparent (16).

3. Dispositif d'éclairage selon la revendication 1 ou 2, **caractérisé en ce que** le composant électronique (14, 18 à 26) et/ou la piste conductrice (22) est disposé sur la face luminescente du moyen luminescent plan (12) faisant face au diaphragme frontal au moins partiellement transparent (16).

4. Dispositif d'éclairage selon une des revendications précédentes, **caractérisé en ce qu'**un film protecteur (24) ou un vernis protecteur (26) est prévu pour au moins une piste conductrice (22).

5. Dispositif d'éclairage selon une des revendications précédentes, **caractérisé en ce que** le moyen luminescent plan (12) est sur sa face électroluminescente opposée au diaphragme au moins partiellement transparent, collé, imprimé ou gravé chimiquement selon le mode de fabrication d'un FPC, sur les pistes conductrices.

6. Dispositif d'éclairage selon la revendication 2, **caractérisé en ce qu'**un circuit imprimé flexible (32, FPC) équipé d'au moins une diode luminescente (14) est disposé sur la face luminescente du moyen luminescent plan (12) faisant face au diaphragme frontal au moins partiellement transparent (16), et **en ce que** ce circuit imprimé flexible (32, FPC) sert de support au composant électronique formé par la diode luminescente (14).

7. Dispositif d'éclairage selon la revendication 6, **caractérisé en ce que** le circuit imprimé flexible (32, FPC) sert en même temps de support à au moins un autre composant électronique, tel qu'en particulier au moins un composant électronique (18) servant à l'activation de la diode luminescente (14) et/ou au moins un composant électronique (20) servant à l'activation du moyen luminescent plan (12) et/ou du circuit imprimé flexible (32, FPC).

8. Dispositif d'éclairage selon une des revendications précédentes, **caractérisé en ce que** le composant électronique (14, 18 à 26) est mis en contact et fixé sur le moyen luminescent plan (12) et/ou en particulier la piste conductrice flexible (22) ou le circuit imprimé flexible (32, FPC) au moyen d'une colle conductrice (28) ou d'une soudure (30).

9. Dispositif d'éclairage selon une des revendications précédentes, **caractérisé en ce que** le composant électronique formé par la diode luminescente (14) et/ou l'autre composant électronique (14, 18 à 26) est disposé entre d'une part le moyen luminescent plan (12) et/ou en particulier la piste conductrice flexible (22) ou le circuit imprimé flexible (32, FPC), et d'autre part le diaphragme frontal au moins partiellement transparent (16).

10. Dispositif d'éclairage selon la revendication 1 ou 2, **caractérisé en ce que** le moyen luminescent plan (12) est muni d'au moins une découpe isolée (34) pour le logement au moins partiel d'une diode luminescente (14).

11. Dispositif d'éclairage selon la revendication 10, **caractérisé en ce que** le moyen luminescent plat (12) est muni d'au moins une découpe isolée (34) pour le logement au moins partiel d'un autre composant électronique, tel qu'en particulier un composant électronique (18) servant à l'activation de la diode luminescente (14) et/ou au moins un composant électronique (20) servant à l'activation du moyen luminescent plan (12).

12. Dispositif d'éclairage selon la revendication 10 ou 11, **caractérisé en ce qu'**un circuit imprimé flexible (32, FPC) équipé d'au moins une diode luminescente (14) et/ou d'au moins un autre composant électronique (14, 18, 22, 26) est disposé sur la face du moyen luminescent plan (12) opposée au diaphragme frontal au moins partiellement transparent (16).

13. Dispositif d'éclairage selon une des revendications précédentes, **caractérisé en ce que** le moyen luminescent plan (12) est un film électroluminescent, une diode luminescente organique ou un guide d'onde optique plat.
